Europäisches Patentamt

European Patent Office

Office européen des brevets

(11) Numéro de publication: **0 411 984 A1**

## DEMANDE DE BREVET EUROPEEN

(21) Numéro de dépôt: 90402091.4

(22) Date de dépôt: 20.07.90

(51) Int. Cl.⁵: **B60P 1/26**, B60P 1/28

(30) Priorité: 31.07.89 FR 8910292

(43) Date de publication de la demande:
06.02.91 Bulletin 91/06

(84) Etats contractants désignés:
AT BE CH DE DK ES FR GB GR IT LI LU NL SE

(71) Demandeur: S.E.S.R. - SOCIETE EUROPEENNE
DE SEMI-REMORQUES
44, rue François 1er
F-75008 Paris(FR)

(72) Inventeur: **Bonnard, Claude Gilbert Joseph**
9, place Saint Rémy
F-54300 Luneville(FR)
Inventeur: **Bourlon, Alain Georges**
42 avenue de la Libération
F-54300 Luneville(FR)

(74) Mandataire: Kügele, Bernhard et al
NOVAPAT FRANCE 63 bis, boulevard
Bessières
F-75017 Paris(FR)

(54) Dispositif de montage de hayon pour véhicule à benne basculante.

(57) Ce dispositif de montage de hayon arrière pour véhicule industriel à benne basculante, comprend deux compas (8, 9) dont les branches sont montées coulissantes et réglables dans des logements (11, 12) prévus sur les parois latérales (2) de la benne et le long des extrémités latérales du hayon, et des moyens (15) pour immobiliser les branches des compas par rapport auxdites parois et au hayon.

FIG.5

La présente invention est relative à un dispositif de montage du hayon arrière sur un véhicule industriel à benne basculante.

Sur un véhicule industriel de ce type, la benne est fermée, à son extrémité arrière, par un hayon qui est articulé par sa partie supérieure de manière à osciller autour d'un axe horizontal fixe situé à l'extrémité supérieure des parois latérales de la benne, de manière à s'ouvrir d'elle-même lorsque la benne est actionnée pour déverser sa charge.

Le volume de la charge utile d'un tel véhicule est habituellement limité, à peu près, par le volume de la benne. Cependant, dans certains cas de transport de matériaux ayant un rapport d'encombrement tel que le remplissage de la benne ne représente qu'une partie de sa capacité de charge, il est souhaitable de pouvoir augmenter le volume de la benne, afin de diminuer les coûts.

Dans ce but on dispose habituellement des rehausses latérales et arrière qui s'adaptent sur les parois de la benne et au-dessus du hayon, permettant ainsi de pratiquement doubler, environ, le volume utile de celle-ci.

Cependant, dans ces conditions, le déchargement du véhicule pose souvent des problèmes en raison du fait que la surface de l'ouverture fermée par le hayon ne représente plus alors qu'une partie de la surface de l'extrémité de la benne, à la partie inférieure de celle-ci, de telle sorte que lorsque la benne est levée, une partie de la charge se bloque fréquemment ce qui nécessite, soit une intervention manuelle difficile et dangereuse, soit de renouveler la manoeuvre de la benne, parfois même à plusieurs reprises.

Le but de l'invention est de remédier à cet inconvénient en réalisant un dispositif permettant d'obtenir l'ouverture totale de l'extrémité arrière d'une benne munie de rehausses latérales et arrière.

Elle a pour objet à cet effet un dispositif de montage de hayon arrière pour véhicule industriel à benne basculante, caractérisé en ce qu'il comprend deux compas dont les branches sont montées coulissantes et règlables dans des logements prévus sur les parois latérales de la benne et le long des extrémités latérales du hayon, et des moyens pour immobiliser les branches des compas par rapport auxdites parois et au hayon.

Suivant une autre caractéristique de l'invention, les branches desdits compas sont reçues dans des logements constitués par des profilés métalliques tubulaires solidaires desdites parois, des rehausses et des extrémités du hayon.

D'une façon avantageuse, lesdits profilés sont disposés le long des bords d'extrémité arrière des parois latérales, des rehausses et du hayon.

De préférence, les branches des compas sont des organes rigides ayant en section une forme complémentaire de celle desdits profilés.

Suivant un mode de réalisation pratique de l'invention lesdits moyens pour immobiliser les branches des compas par rapport aux parois latérales et au hayon sont constitués par des goupilles adaptées pour coopérer avec des trous prévus dans les branches des compas et dans lesdits profilés.

Suivant un autre mode de réalisation, le dispositif comprend une rehausse de hayon qui est fixée entre les branches des compas reliées aux côtés du hayon, au-dessus de celui-ci, par exemple au moyen de boulons.

Suivant une variante, lesdits logements sont des profilés venus de fabrication avec les parois de la benne et avec le hayon.

Suivant une autre variante, lesdits logements sont des profilés fixés sur les parois de la benne et sur les extrémités du hayon, par exemple soudes.

La description qui va suivre, en regard des dessins annexés à titre d'exemples non limitatifs, permettra de bien comprendre comment l'invention peut être mise en pratique.

La figure 1 est une vue partielle en perspective de l'arrière d'un véhicule industriel à benne basculante, en position basculée, montrant l'articulation d'un hayon en position classique.

La figure 2 est une vue partielle analogue à celle de la figure 1, montrant la même benne munie de rehausses latérales et arrière et faisant apparaître l'ouverture partielle obtenue dans ce cas.

La figure 3 est une vue analogue à celle de la figure 2, mais montrant une benne avec des rehausses, équipée d'un dispositif de montage de hayon à rehausse, suivant l'invention.

La figure 4 est une vue partielle en élévation latérale du dispositif de montage de hayon suivant l'invention monté sur une benne sans rehausses.

La figure 5 est une vue analogue à celle de la figure 4 montrant le même dispositif monté sur une benne avec rehausse.

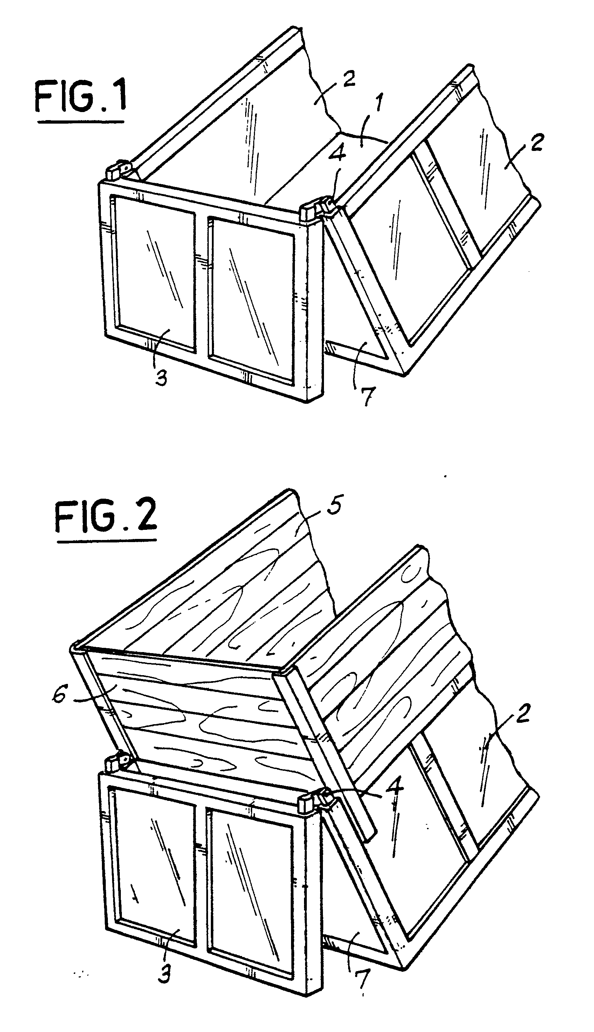

En se référant à la figure 1, la benne basculante d'un véhicule industriel comporte un fond 1, deux parois latérales de gauche et de droite 2 et un hayon 3 articulé de façon oscillante par ses angles supérieurs autour de courts axes horizontaux 4 fixés sur les angles supérieurs des extrémités arrière des parois latérales de la benne.

La figure 2 montre la même benne équipée de rehausses latérales 5 et d'une rehausse arrière 6 fixe. On voit que les dimensions de l'ouverture 7 fermée par le hayon 3 sont les mêmes dans les deux cas. Si des matériaux sont chargés dans la benne jusqu'au niveau des rehausses, il se produit au déchargement une tendance de ces matériaux à se bloquer par effet de pontage, du fait que la partie inférieure du chargement se déverse en premier.

Suivant un mode de réalisation de l'invention, le dispositif d'articulation du hayon de la benne comprend deux compas formés chacun de deux organes rectilignes rigides 8,9, articulés ensemble à l'une de leurs extrémités autour d'un court axe 10, l'agencement étant tel qu'en position repliée les branches 8,9 desdits compas soient parallèles l'une contre l'autre; ces branches 8,9 sont engagées de façon coulissante dans des profilés métalliques tubulaires 11,12 respectivement solidaires des bords d'extrémité arrière des parois latérales 2 et des bords d'extrémité du hayon 3.

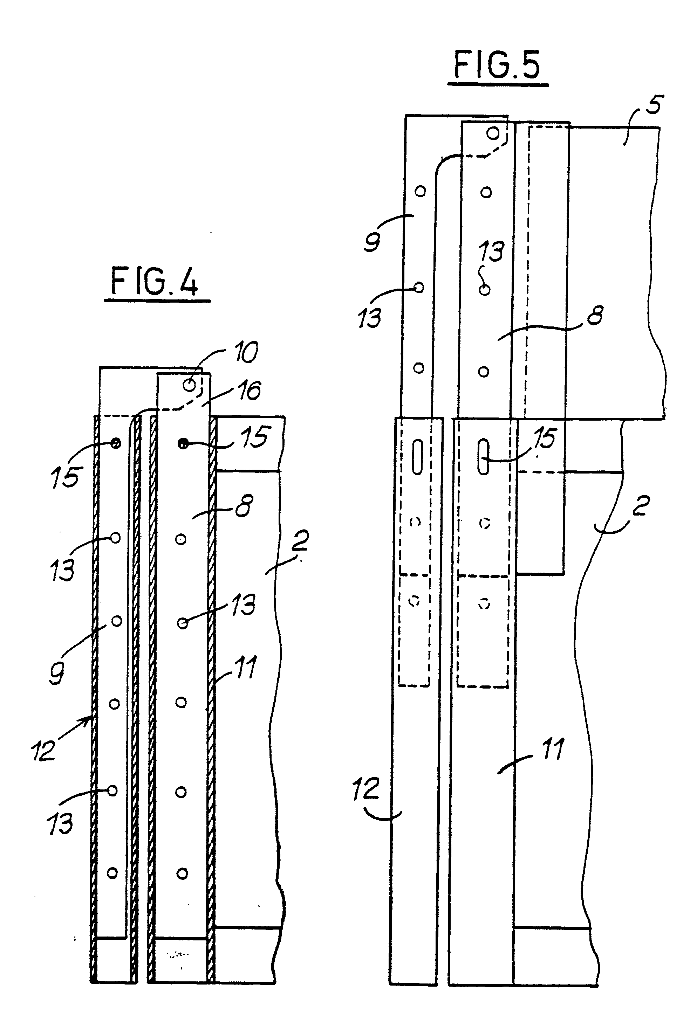

De façon commode, les branches 8,9 comportent des trous 13 également espacés, et les profilés tubulaires 11,12 du hayon et des parois latérales comportent chacun au moins un trou (non visible au dessin) au voisinage de leurs extrémités supérieures, et des broches 15 sont introduites à travers les trous des profilés et à travers ceux 13 des branches des compas afin d'arrêter celles-ci dans la position choisie, comme représenté aux figures 4 et 5.

On comprend, bien entendu, que les branches 8,9 des compas ont en section une forme complémentaire de celle des profilés tubulaires 11,12, ainsi que des dimensions leur permettant de coulisser dans ces profilés.

Si la construction de la benne et de son hayon le permet, on utilise de façon avantageuse des profilés, ou autres parties tubulaires venues de fabrication et formant les bords arrière des parois latérales 2 de la benne et les bords d'extrémité du hayon.

Si les parois de la benne ne comportent pas, de fabrication, de tels profilés tubulaires, ceux-ci sont facilement rapportés et fixés en place, par exemple par soudage.

Suivant l'invention, les rehausses 5 adaptables sur les parois latérales 2 peuvent également être pourvues de profilés tubulaires 16, identiques aux profilés 11,12 et fixés sur leurs bords arrière de manière à s'adapter dans le prolongement de ceux des parois latérales. Il peut également être prévu une rehausse 17 pour le hayon. Cette rehausse 17 est avantageusement fixée entre les branches 9 des compas, par exemple au moyen de boulons (non représentés), au-dessus du hayon 3.

On comprend que lorsqu'on désire adapter les rehausses sur les parois latérales de la benne, on retire les compas 8,9 en les faisant coulisser dans leurs logements, on adapte les rehausses latérales 5 sur les parois latérales 2, on ré-introduit les branches 8 dans les logements 11 à travers ceux 16 des rehausses, on les immobilise au moyen de broches 15, on fixe la rehausse 17 entre les branches 9 des compas, par exemple au moyen de boulons, et on ré-introduit ces branches dans les logements 12 du hayon 3 et on les immobilise au moyen d'autres broches 15.

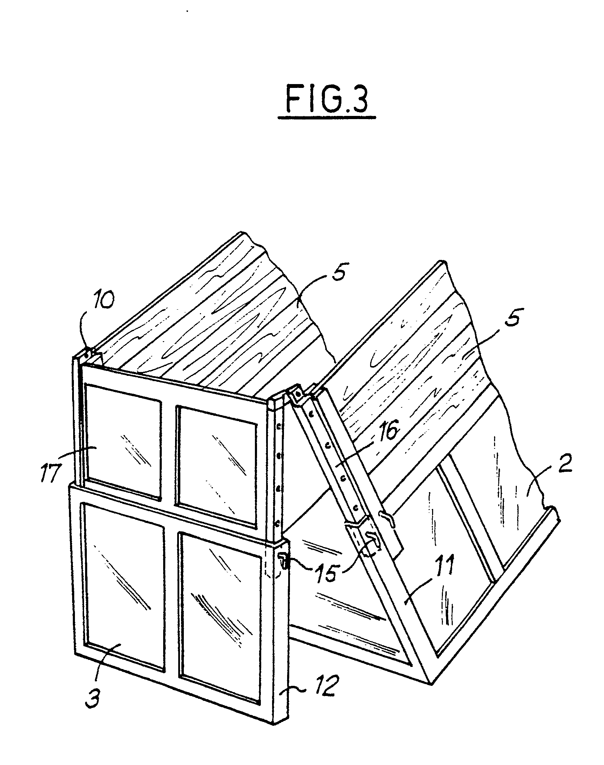

On a alors obtenu le dispositif suivant l'invention tel que représenté à la figure 3, dans lequel le fonctionnement du hayon est classique, mais les dimensions de l'ouverture qu'il ferme correspondent à la section totale de la benne, avec ses rehausses.

## Revendications

1 - Dispositif de montage de hayon arrière pour véhicule industriel à benne basculante, caractérisé en ce qu'il comprend deux compas dont les branches (8, 9) sont reçues de façon coulissante dans les logements constitués par des profilés métalliques tubulaires (11, 12) solidaires des parois latérales de la benne, des rehausses et des extrémités du hayon.

2 - Dispositif suivant la revendication 1, caractérisé en ce que lesdits profilés (11, 12) sont disposés le long des bords d'extrémité arrière des parois latérales (2), des rehausses (5) et du hayon (3).

3 - Dispositif suivant la revendication 2, caractérisé en ce que les branches des compas sont des organes rigides (8, 9) ayant en section une forme complémentaire de celle desdits profilés.

4 - Dispositif suivant la revendication 1, caractérisé en ce que lesdits moyens pour immobiliser les branches des compas par rapport aux parois latérales (2) et au hayon (3) sont constitués par des broches (15) adaptées pour coopérer avec des trous (13) prévus dans les branches (8, 9) des compas et dans lesdits profilés.

5 - Dispositif suivant l'une quelconque des revendications précédentes, caractérisé en ce qu'il comprend en outre une rehausse (17) pour le hayon (3), fixée entre les branches (9) desdits compas, par exemple au moyen de boulons.

6 - Dispositif suivant la revendication 2, caractérisé en ce que lesdits logements sont des profilés (11, 12) venus de fabrication avec les parois de la benne et avec le hayon.

7 - Dispositif suivant la revendication 2, caractérisé en ce que lesdits logements sont des profilés (11, 12) rapportés et fixés sur les parois (2) de la benne et sur les extrémités du hayon, par exemple soudés.

FIG.1

FIG.2

# FIG.3

## FIG.5

## FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 475 761  (MILROY)<br>* colonne 4, ligne 15 - colonne 5, ligne 54; figures 4, 5 *<br>– – – | 1 | B 60 P 1/26<br>B 60 P 1/28 |
| A | US-A-4 059 307  (NEUFELDT)<br>* colonne 2, ligne 13 - colonne 4, ligne 49; figures 1-5 *<br>– – – | 1 | |
| A | US-A-3 574 391  (DOBOZE)<br>* abrégé; figures 1-3 *<br>– – – – – | 1 | |

|  | DOMAINES TECHNIQUES RECHERCHES (Int. Cl.5) |
|---|---|
|  | B 60 P<br>B 62 D |

Le présent rapport de recherche a été établi pour toutes les revendications

| Lieu de la recherche | Date d'achèvement de la recherche | Examinateur |
|---|---|---|
| La Haye | 31 octobre 90 | VANNESTE M.A.R. |